# NOUVEAU FASCICULE DE BREVET EUROPEEN

(11) **EP 0 238 592 B2**
(45) Date de publication et mention de la décision concernant l'opposition: **12.04.1995**
(45) Mention de la délivrance du brevet: 28.02.1990
(21) Numéro de dépôt: 86905857.8
(22) Date de dépôt: 03.10.1986
(51) Int. Cl.: B01D 53/14, C01B 17/16

(54) **PROCEDE POUR L'EXTRACTION SELECTIVE DE L'H2S D'UN GAZ EN CONTENANT**
VERFAHREN ZUR SELEKTIVEN EXTRAHIERUNG VON H2S AUS EINEM GAS
METHOD FOR THE SELECTIVE REMOVAL OF H2S FROM A H2S-CONTAINING GAS

(30) Priorité: 04.10.1985 FR 8514742
(43) Date de publication de la demande: 30.09.1987
(73) Titulaire: SOCIETE NATIONALE ELF AQUITAINE (PRODUCTION), 92400 Courbevoie (FR)
(72) Inventeur: ELGUE, Jean, F-64140 Lons (FR); OLIVEAU, Olivier, F-64230 Lescar (FR); PEYTAVY, Jean-Louis, F-64230 Lescar (FR)
(74) Mandataire: Boillot, Marc
(86) Numéro de dépôt international: FR8600342
(87) Numéro de publication internationale: WO8701961

(56) Documents cités:
- DE-A- 2 804 451
- DE-C- 2 945 675
- US-A- 4 406 868

## Description

L'invention concerne un procédé pour l'extraction sélective de l'H₂S d'un gaz naturel renfermant simultanément H₂S et CO₂.

L'extraction sélective de l'H₂S d'un gaz naturel renfermant simultanément H₂S et CO₂ est couramment utilisée pour éliminer la plus grande partie, voire la quasi-totalité, de l'H₂S présent dans ce gaz en vue de produire un gaz désulfuré ayant une teneur en H₂S inférieure à un seuil imposé et/ou de générer un courant de gaz acide riche en H₂S et renfermant une quantité aussi faible que possible de CO₂, un tel courant de gaz acide étant utilisable comme source d'H₂S pour la production de soufre suivant le procédé CLAUS d'oxydation ménagée de l'H₂S ou encore pour la synthèse de composés thioorganiques.

Une telle extraction sélective de l'H₂S est habituellement effectuée par lavage du gaz à traiter au moyen d'un liquide absorbant régénérable par chauffage et sélectif de l'H₂S, c'est-à-dire d'un liquide absorbant qui d'une part est susceptible de retenir les composés gazeux acides tels que H₂S et CO₂ et de restituer pratiquement la totalité de ces composés acides par chauffage et d'autre part possède un pouvoir absorbant nettement plus important à l'égard d'H₂S qu'à l'égard de CO₂. Le liquide absorbant fixe les composés gazeux acides par simple dissolution physique ou/et par dissolution après formation d'un sel ou d'un complexe, instable thermiquement, par réaction desdits composés gazeux acides avec un composé basique, par exemple amine ou alcanolamine, contenu dans le liquide absorbant.

Dans le procédé de la citation US-A-4406868, le gaz à traiter, qui renferme H₂S et CO₂, est mis en contact, dans une zone d'absorption, avec le liquide absorbant choisi, circulant à contre-courant, de manière à produire un gaz a teneur réduite en H₂S, que l'on évacue en tête de la zone d'absorption, et à soutirer en fond de ladite zone un courant de liquide absorbant chargé en H₂S et renfermant aussi peu que possible de CO₂. Ledit courant de liquide absorbant est alors introduit dans une zone de régénération, dans laquelle il est soumis à deux régénérations successives par rebouillage. La première régénération est une régénération partielle destinée à libérer une phase gazeuse renfermant CO₂ et H₂S dans un rapport molaire CO₂ : H₂S supérieur au rapport correspondant dans le gaz à traiter, tandis que la seconde régénération est une régénération quasi-complète produisant un effluent gazeux acide enrichi en H₂S et un solvant régénéré, pratiquement exempt de composés gazeux acides dissous, qui est réutilisé comme liquide absorbant dans la zone d'absorption.

Bien qu'un tel procédé conduise à un enrichissement satisfaisant en H₂S de l'effluent gazeux acide produit, la consommation importante d'énergie pour la réalisation des deux régénérations successives par rebouillage représente un handicap sérieux pour une mise en oeuvre du procédé à grande échelle.

La citation DE-A-2945675 concerne un procédé de régénération en deux étapes pour la production d'H₂S quasiment pur à partir de solutions absorbantes chargées d'H₂S et de CO₂, qui sont issues du lavage de gaz renfermant H₂S et CO₂ à l'aide de liquides absorbants tels que, par exemple, des solutions aqueuses d'alcanolamines. Dans une première étape, on injecte la solution absorbante à régénérer dans la partie supérieure d'une première zone de désorption opérant sous une pression de 1 à 3 bars et une température de 40 °C à 110 °C et plus particulièrement de 80 °C à 90 °C et on soumet ladite solution dans cette première zone à un stripage à l'aide d'un gaz injecté dans la partie inférieure de ladite zone, avec production, en tête de la première zone, d'une phase gazeuse constituée du gaz de stripage et de la quasi totalité du CO₂ et, en fond de cette zone, d'une solution absorbante stripée renfermant essentiellement H₂S comme gaz dissous. Dans une deuxième étape, on injecte la solution absorbante stripée dans la partie supérieure d'une deuxième zone de désorption, dans laquelle la solution absorbante stripée est chauffée à une température de 105 °C à 140 °C et sous une pression de 1 à 4 bars, de manière à produire, en tête de ladite deuxième zone, une phase gazeuse consistant en H₂S quasiment pur et, en fond de cette zone, une solution absorbante régénérée, que l'on recycle au lavage du gaz renfermant H₂S et CO₂.

Une fraction, par exemple 5 à 10 %, de la phase gazeuse sortant en tête de la deuxième zone de désorption est utilisée pour constituer le gaz de stripage injecté dans la première zone de désorption.

La citation DE-A-2804451 contient l'enseignement d'un procédé pour l'extraction sélective de l'H₂S d'un gaz renfermant simultanément H₂S et CO₂,dans lequel on met en contact le gaz à traiter, dans une zone d'absorption, avec un liquide absorbant sélectif de l'H₂S et régénérable par chauffage consistant en une solution aqueuse de méthyldiéthanolamine, circulant à contre-courant, de manière à évacuer un gaz à teneur réduite en H₂S en tête de la zone d'absorption et un courant de liquide absorbant chargé d'H₂S en fond de ladite zone, on envoie ledit courant de liquide absorbant chargé d'H₂S dans la partie supérieure d'une zone de traitement, dite zone d'enrichissement, dans laquelle s'écoule le liquide absorbant enrichi en H₂S, on soutire le liquide absorbant présent en fond de la zone d'enrichissement et l'introduit dans une zone de régénération dans laquelle ledit liquide absorbant est soumis à une régénération par chauffage de manière à libérer les gaz absorbés et à former un effluent gazeux acide riche en H₂S en tête de la zone de régénération et produire un liquide absorbant régénéré en fond de cette zone, ledit liquide absorbant régénéré étant soutiré et recyclé dans la zone d'absorption pour la mise en contact avec le gaz a traiter, on soutire une partie seulement de l'effluent gazeux riche en H₂S disponible en tête de la zone de régénération pour constituer un flux gazeux acide enrichi en H₂S et introduit le reste dudit effluent gazeux dans la zone d'enrichissement en un point situé entre le fond de ladite zone et le point d'amenée du liquide absorbant chargé d'H₂S, et l'on capte en tête de la zone d'enrichissement un courant gazeux renfermant substantiellement moins d'H₂S que l'effluent gazeux acide disponible en tête de la zone de régénération, ledit courant étant réinjecté dans la zone d'absorption entre le fond de ladite zone et le point d'arrivée du liquide absorbant régénéré recyclé dans cette zone.

L'invention a pour objet un procédé, qui est du type du procédé antérieur enseigné par la citation DE-A-2804451 et qui s'en distingue et se caractérise donc en ce que le gaz à traiter renfermant H₂S et CO₂ injecté dans la zone d'absorption possède une pression allant de 50 à 80 bars absolus et en ce que l'on met en oeuvre la régénération de manière à obtenir en tête de la zone de régénération une pression absolue située entre 1,3 et 2,5 bars, on maintient dans la zone d'enrichissement des conditions de température et de pression telles que les températures dans ladite zone soient intermédiaires entre la température en tête de la zone de régénération et la température en fond de la zone d'absorption et conduisent à une température en fond de la zone d'enrichissement comprise entre 50 °C et 80 °C et que la pression en tête de la zone d'enrichissement ait une valeur allant de 5 à 15 bars absolus, ladite pression en tête de la zone d'enrichissement étant maintenue à la valeur choisie en amenant la portion de l'effluent gazeux acide destinée à être injectée dans la zone d'enrichissement à une pression suffisante, par compression, avant d'effectuer ladite injection.

L'importance du flux gazeux acide enrichi en H₂S, qui est soutiré en tête de la zone de régénération, dépend de la teneur en H₂S que l'on désire obtenir dans ce flux et plus précisément varie en sens inverse de cette teneur. Ledit flux gazeux acide enrichi en H₂S représente une fraction du débit total des gaz acides présents dans le gaz à traiter, cette fraction étant d'autant plus faible que la teneur en H₂S recherchée pour le flux gazeux acide enrichi est élevée.

Le procédé suivant l'invention peut être utilisé pour extraire sélectivement l'H₂S contenu dans tout type de gaz naturels renfermant simultanément H₂S et CO₂, qui sont disponibles sous des pressions allant de 50 bars absolus à 80 bars absolus, en vue de produire un gaz désulfuré ayant une teneur minimale fixée en H₂S et de former simultanément un flux gazeux acide fortement enrichi en H₂S et à teneur réduite en CO₂.

La concentration en méthyldiéthanolamine du liquide absorbant est comprise entre 1 N et 8 N et se situe de préférence entre 3 N et 6 N.

La pression régnant dans la zone d'absorption correspond sensiblement à celle du gaz à traiter que l'on injecte dans cette zone et peut donc aller de 50 bars absolus à 80 bars absolus.

La température à choisir pour la mise en contact du gaz à traiter dans la zone d'absorption avec le liquide absorbant circulant à contre-courant n'est pas critique. Par exemple, des températures d'absorption allant d'environ 10 °C à environ 80 °C peuvent être choisies.

Le débit de liquide absorbant, qui circule dans la zone d'absorption à contre-courant du gaz à traiter, est lié, entre autres, à la teneur en H₂S du gaz à traiter et également à la quantité d'H₂S que l'on tolère dans le gaz désulfuré évacué en tête de la zone d'absorption. Ledit débit de liquide absorbant est ajusté pour obtenir en tête de la zone d'absorption un gaz désulfuré répondant aux spécifications imposées eu égard à la teneur en H₂S.

Les conditions de pression et de température imposées dans la zone de régénération sont choisies de telle sorte que l'H₂S et le CO₂ retenus par le liquide absorbant durant son passage dans les zones d'absorption puis d'enrichissement soient libérés et que le liquide absorbant soutiré en fond de la zone de régénération soit pratiquement exempt de composés gazeux dissous et que la pression absolue en tête de la zone de régénération se situe entre 1,3 et 2,5 bars. Le maintien d'une telle pression impose une température en fond de zone de régénération comprise habituellement entre 100 et 180 °C environ, ce qui correspond à une température en tête de la zone de régénération allant d'environ 80 °C à environ 125 °C.

Dans la zone d'enrichissement, le liquide absorbant, qui provient de la zone d'absorption et contient déjà une certaine quantité d'H₂S et de CO₂ absorbés extraite du gaz à traiter injecté dans la zone d'absorption, rencontre un effluent gazeux formé d'une partie des composés gazeux acides libérés au cours de la régénération du liquide absorbant dans la zone de régénération et, par suite de sa sélectivité pour H₂S, il réabsorbe une quantité supplémentaire importante d'H₂S au cours de sa traversée dans la zone d'enrichissement et de ce fait le liquide absorbant arrivant dans la zone de régénération renferme une quantité d'H₂S substantiellement plus élevée et beaucoup moins de CO₂ que le liquide absorbant soutiré de la zone d'absorption. En conséquence la phase gazeuse présente en tête de la zone de régénération a une teneur en H₂S nettement supérieure à celle de la phase gazeuse qui serait obtenue par régénération du liquide absorbant sortant de la zone d'absorption. En contrôlant l'importance du flux gazeux acide soutiré de la zone de régénération on peut ajuster la teneur en H₂S de ce flux gazeux à la valeur souhaitée.

La portion d'effluent gazeux, qui est prélevée en tête de la zone de régénération et introduite dans la zone d'enrichissement, est avantageusement refroidie, par échange indirect de calories, à une température compatible avec les températures désirées dans la zone d'enrichissement avant d'être injectée dans ladite zone.

Le courant gazeux sortant en tête de la zone d'enrichissement a une pression inférieure à celle du gaz à traiter introduit dans la zone d'absorption et avant d'injecter ce courant gazeux dans la zone d'absorption on amène ledit courant gazeux, par compression, à une pression sensiblement égale à celle du gaz à traiter.

De même, on soumet l'effluent gazeux, prélevé en tête de la zone de régénération et introduit dans la zone d'enrichissement, à une compression avant l'introduction dudit effluent dans cette zone, en vue d'amener cet effluent gazeux à une pression suffisante pour obtenir la pression désirée en tête de la zone d'enrichissement.

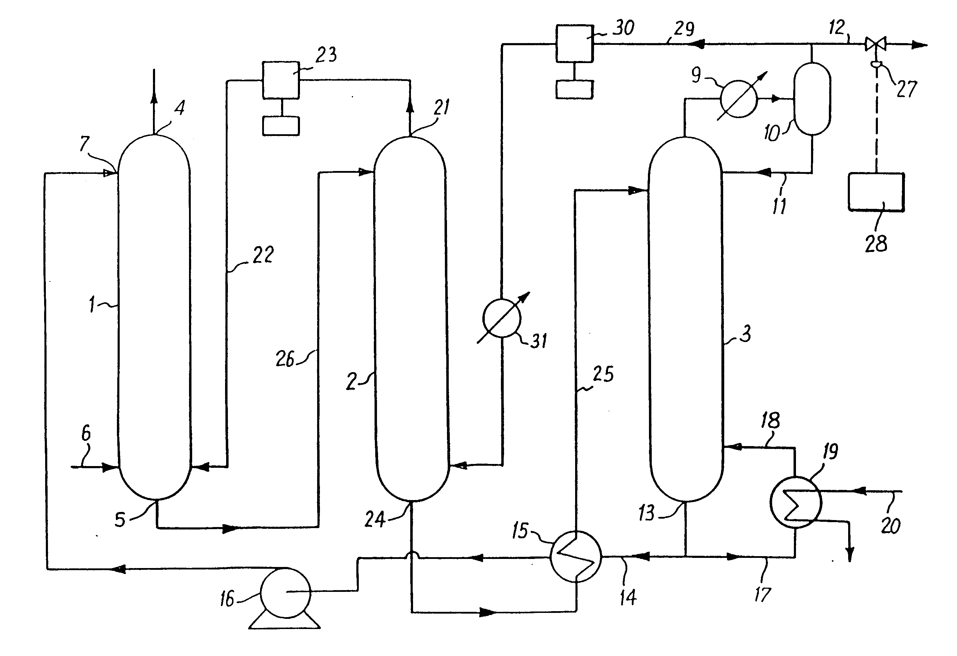

L'invention sera mieux comprise à la lecture de la description suivante de l'une de ses formes de mise en oeuvre illustrée par la figure du dessin annexé représentant un dispositif pour la mise en oeuvre du procédé selon l'invention utilisant des colonnes à plateaux.

En se référant à la figure, le dispositif d'extraction sélective de l'H₂S de gaz naturel renfermant simultanément H₂S et CO₂ comporte trois colonnes, à savoir une colonne 1 d'absorption, une colonne 2 d'enrichissement et une colonne 3 de régénération, qui sont chacune équipées de plateaux de contact gaz/liquide. La colonne 1 est munie en tête d'une sortie 4 pour les gaz et en fond d'une sortie 5 pour les liquides et en outre elle est équipée, dans sa partie inférieure, d'un conduit 6 d'injection du gaz à traiter et, dans sa partie supérieure, d'une amenée 7 de liquide. La colonne 3 de régénération est pourvue en tête d'un système condenseur/séparateur, qui comporte un condenseur 9 et un séparateur gaz/liquide 10 muni d'une tubulure 11 de retour des condensats à la colonne 3 et d'un conduit 12 d'évacuation pour les gaz formant un conduit de soutirage des gaz arrivant en tête de la colonne de régénération, tandis qu'en fond de ladite colonne est présente une sortie 13 pour les liquides, ladite sortie étant connectée par un conduit 14 de recyclage, à travers le premier circuit d'échange d'un échangeur de chaleur 15 et une pompe 16, à l'amenée 7 de liquide dans la colonne 1 d'absorption. Dans sa partie inférieure, la colonne de régénération est associée, par des tubulures d'entrée 17 et de sortie 18, à un rebouilleur 19 chauffé par échange indirect de calories au moyen de vapeur d'eau saturée circulant dans une tubulure 20.

La colonne 2 d'enrichissement présente d'une part en tête une sortie 21 pour les gaz, ladite sortie se prolongeant par un conduit 22 sur lequel est monté un compresseur 23 et qui débouche dans la colonne 1 d'absorption au voisinage du conduit 6 d'amenée du gaz à traiter, et d'autre part en fond une sortie 24 pour les liquides, cette dernière étant connectée par un conduit 25, à travers le second circuit d'échange de l'échangeur de chaleur 15, à la partie supérieure de la colonne de régénération en dessous du point où débouche la tubulure 11 de retour des condensats. La sortie 5 pour les liquides de la colonne d'absorption est prolongée par un conduit 26, qui débouche à la partie supérieure de la colonne d'enrichissement en dessous de la sortie 21 pour les gaz.

Le conduit 12 de soutirage des gaz en tête de la colonne de régénération est équipé d'une vanne 27 à débit réglable, dont la commande est effectuée manuellement ou avantageusement, comme représenté sur la figure, à l'aide d'un régulateur 28, qui peut être du type assurant soit le maintien d'un débit constant pour le flux gazeux soutiré à travers la vanne ou le maintien d'une teneur constante en H₂S dans ledit flux gazeux. En amont de la vanne 27 le conduit 12 porte un conduit 29 en dérivation sur lequel est monté un compresseur 30 et, en aval du compresseur, un système de refroidissement 31 fonctionnant par échange indirect de calories, ledit conduit 29 débouchant dans la colonne d'enrichissement dans la partie inférieure de cette dernière.

Le fonctionnement de ce dispositif peut être schématisé comme suit :
Le gaz à traiter, qui renferme l'H₂S à extraire et en outre du CO₂ dont on veut (imiter au maximum l'extraction, arrive sous une pression élevée de 50 à 80 bars absolus, dans la colonne 1 d'absorption par le conduit 6 et rencontre, à contre-courant, le liquide absorbant sélectif de l'H₂S et régénérable par chauffage qui est introduit, par le conduit 14 de recyclage, au point d'amenée 7 de la colonne d'absorption et s'écoule par gravité dans ladite colonne. Par suite de sa sélectivité pour l'H₂S, le liquide absorbant fixe la plus grande partie de l'H₂S présent dans le gaz à traiter ainsi qu'une quantité plus faible de CO₂. Par la sortie 4 de la colonne 1 d'absorption est évacué un gaz dont la teneur en H₂S a été abaissée à la valeur minimale désirée.

Le liquide absorbant chargé des composés gazeux acides H₂S et CO₂ absorbés dans la colonne d'absorption sort de ladite colonne par la sortie 5 et travers la colonne 2 d'enrichissement, dont le rôle sera expliqué plus loin, pour parvenir dans la colonne 3 de régénération par le conduit 25 après réchauffage dans l'échangeur de chaleur 15. Dans la colonne de régénération, le liquide absorbant est maintenu à l'ébullition sous une pression supérieure à la pression atmosphérique et correspondant à une pression en tête de ladite colonne entre 1,3 et 2,5 bars absolus, de manière à libérer les composés gazeux acides absorbés et à réaliser leur stripage par les vapeurs du liquide absorbant. Le liquide absorbant régénéré est soutiré de la colonne de régénération par la sortie 13 en fond de colonne et recyclé dans la colonne d'absorption par le conduit 14, sous l'action de la pompe 16, après avoir été refroidi à la température appropriée pour l'absorption par transfert de calories, dans l'échangeur de chaleur 15, au liquide absorbant dirigé par le conduit 25 depuis la colonne d'enrichissement vers la colonne de régénération. Les calories nécessaires au maintien à l'ébullition du liquide absorbant dans la colonne de régénération sont fournies par passage d'une partie du liquide régénéré soutiré par la sortie 13 dans le rebouilleur 19 chauffé par la vapeur d'eau saturée passant dans la tubulure 20 et retour du liquide absorbant chaud à la colonne de régénération par la tubulure 18.

Les composés gazeux acides H₂S et CO₂ libérés dans la colonne de régénération sont stripés par les vapeurs du liquide absorbant et aboutissent, après passage dans le condenseur 9 puis dans le séparateur gaz/liquide 10, à la sortie pour les gaz dudit séparateur puis dans le conduit 12. Une fraction seulement desdits composés gazeux acides est soutirée à travers la vanne 27 commandée par le régulateur 28. La partie des composés gazeux acides non soutirée par la vanne 27 est introduite, par le conduit 29 dans la partie inférieure de la colonne d'enrichissement après avoir été comprimée, dans le compresseur 30, à une pression suffisante pour obtenir la pression désirée en tête de la colonne d'enrichissement, allant de 5 à 15 bars absolus, puis soumise à un refroidissement approprié dans le système 31 de refroidissement.

Dans la colonne d'enrichissement, le liquide absorbant, qui provient de la colonne d'absorption et contient donc déjà une certaine quantité d'H₂S et de CO₂ absorbés extraite du gaz à traiter injecté par le conduit 6 dans la zone d'absorption, rencontre un effluent gazeux formé d'une partie des composés gazeux acides H₂S et CO₂ libérés au cours de la régénération du liquide absorbant dans la colonne de régénération et par suite de sa sélectivité pour H₂S il réabsorbe une quantité supplémentaire substantielle d'H₂S. Les composés gazeux acides non absorbés dans la colonne d'enrichissement sont injectés dans la colonne d'absorption, par le conduit 22, au voisinage du point d'amenée du gaz à traiter dans ladite colonne, après avoir été amenés, dans le compresseur 23, à une pression sensiblement égale à celle du gaz à traiter. Le liquide absorbant s'enrichit fortement en H₂S au cours de sa traversée de la colonne d'enrichissement si bien que le liquide absorbant arrivant dans la colonne de régénération renferme une quantité d'H₂S substantiellement plus élevée et beaucoup moins de CO₂ que le liquide absorbant soutiré par la sortie 5 de la colonne d'absorption. De ce fait la phase gazeuse acide présente en tête de la colonne de régénération a une teneur en H₂S bien supérieure à celle de la phase gazeuse qui serait produite par régénération du liquide absorbant sortant de la colonne d'absorption. Le flux gazeux soutiré à travers la vanne 27 est donc fortement enrichi en H₂S. En contrôlant l'importance dudit flux gazeux acide, on peut ajuster sa teneur en H₂S à la valeur désirée. En outre la plus grande partie du CO₂ se retrouve dans le gaz à teneur réduite en H₂S évacué par la sortie 4 de la colonne d'absorption.

Pour compléter la description du procédé suivant l'invention qui vient d'être présentée, on donne ci-après, à titre non limitatif, un exemple concret de mise en oeuvre de ce procédé.

### EXEMPLE :

On traitait un gaz naturel consistant essentiellement en méthane et renfermant, exprimés en volume, 1 % d'H₂S et 3 % de CO₂ à titre d'impuretés acides, en opérant dans un dispositif analogue à celui décrit en référence à la figure du dessin annexé.

Dans le dispositif utilisé les colonnes d'absorption, d'enrichissement et de régénération renfermaient respectivement 20, 12 et 18 plateaux.

Le liquide absorbant était constitué d'une solution aqueuse 4 N de méthyldiéthanolamine (MDEA).

Le gaz naturel à traiter arrivait dans la colonne d'absorption 1, par le conduit 6, avec un débit de 100 000 Nm³/h, une pression de 60 bars et une température d'environ 30 °C et rencontrait dans ladite colonne, à contre-courant, la solution aqueuse de MDEA introduite dans la colonne au point 7, par le conduit de recyclage 14, avec un débit de 60 m³/h et une température d'environ 40 °C.

Par la sortie 4 de la colonne d'absorption on évacuait un gaz naturel désulfuré renfermant, en volume, 4 p.p.m d'H₂S et 0,6 % de CO₂.

La solution aqueuse de MDEA était portée en fond de la zone de régénération à une température d'environ 130 °C, par de la vapeur d'eau saturée sous une pression absolue de 4 bars circulant dans la tubulure 20 du rebouilleur 19, de manière à maintenir une pression absolue de 1,9 bars en tête de ladite colonne de régénération.

Une partie, à savoir 1 600 Nm³/h, des composés gazeux acides libérés dans la colonne de régénération était soutirée à travers la vanne 27 pour former le flux gazeux acide enrichi en H₂S, ledit flux gazeux ayant une température de 40 °C et renfermant, en volume, 63 % d'H₂S et 37 % de CO₂ tandis que le reste desdits composés gazeux acides était comprimé sous une pression absolue de 8 bars dans le compresseur 30 puis refroidi à environ 50 °C dans le système 31 de refroidissement et entrait ensuite dans la colonne 2 d'enrichissement avec un débit de 1 330 Nm³/h.

En tête de la colonne 2 d'enrichissement on évacuait un courant gazeux ayant une température d'environ 60 °C et renfermant, en volume, 30 % d'H₂S, 65 % de CO₂ et 5 % de CH₄ et injectait ce courant gazeux dans la colonne 1 d'absorption par le conduit 22, après avoir amené ledit courant gazeux sous une pression de 60 bars dans le compresseur 23. Le débit de gaz évacué en tête de la colonne d'enrichissement représentait 1 530 Nm³/h.

Sur la base des informations fournies par le présent exemple, on peut voir que l'application du procédé suivant l'invention au traitement du gaz naturel susmentionné permet d'une part d'obtenir un gaz naturel pratiquement désulfuré et susceptible d'être envoyé dans les circuits de distribution et d'autre part de produire un flux gazeux acide fortement enrichi en H₂S (composition en volume 63 % d'H₂S et 37 % de CO₂), un tel flux gazeux étant directement utilisable comme source d'H2S pour les usines à soufre CLAUS réalisant une combustion ménagée de l'H₂S.

## Revendications

1. Procédé pour l'extraction sélective de l'H₂S d'un gaz naturel renfermant simultanément H₂S et CO₂, dans lequel on met en contact le gaz à traiter, dans une zone d'absorption, avec un liquide absorbant sélectif de l'H₂S et régénérable par chauffage consistant en une solution aqueuse de méthyldiéthanolamine, circulant à contre-courant, de manière à évacuer un gaz à teneur réduite en H₂S en tête de la zone d'absorption et un courant de liquide absorbant chargé d'H₂S en fond de ladite zone, on envoie ledit courant de liquide absorbant chargé d'H₂S dans la partie supérieure d'une zone de traitement, dite zone d'enrichissement, dans laquelle s'écoule le liquide absorbant enrichi en H₂S, on soutire le liquide absorbant présent en fond de la zone d'enrichissement et l'introduit dans une zone de régénération dans laquelle ledit liquide absorbant est soumis à une régénération par chauffage de manière à libérer les gaz absorbés et à former un effluent gazeux acide riche en H₂S en tête de la zone de régénération et produire un liquide absorbant regénéré en fond de cette zone, ledit liquide absorbant régenéré étant soutiré et recyclé dans la zone d'absorption pour la mise en contact avec le gaz à traiter, on soutire une partie seulement de l'effluent gazeux riche en H₂S disponible en tête de la zone de régénération pour constituer un flux gazeux acide enrichi en H₂S et introduit le reste dudit effluent gazeux dans la zone d'enrichissement en un point situé entre le fond de ladite zone et le point d'amenée du liquide absorbant chargé d'H₂S, et l'on capte en tête de la zone d'enrichissement un courant gazeux renfermant substantiellement moins d'H₂S que l'effluent gazeux acide disponible en tête de la zone de régénération, ledit courant étant réinjecté dans la zone d'absorption entre le fond de ladite zone et le point d'arrivée du liquide absorbant régénéré recyclé dans cette zone, ledit procédé se caractérisant en ce que le gaz à traiter renfermant H₂S et CO₂ injecté dans la zone d'absorption possède une pression allant de 50 à 80 bars absolus et en ce que l'on met en oeuvre la régénération de manière à obtenir en tête de la zone de régénération une pression absolue située entre 1,3 et 2,5 bars, on maintient dans la zone d'enrichissement des conditions de température et de pression telles que les températures dans ladite zone soient intermédiaires entre la température en tête de la zone de régénération et la température en fond de la zone d'absorption et conduisent à une température en fond de la zone d'enrichissement comprise entre 50°C et 80°C et que la pression en tête de la zone d'enrichissement ait une valeur allant de 5 à 15 bars absolus, ladite pression en tête de la zone d'enrichissement étant maintenue à la valeur choisie en amenant la portion de l'effluent gazeux acide destinée à être injectée dans la zone d'enrichissement à une pression suffisante, par compression, avant d'effectuer ladite injection.

2. Procédé selon la revendication 1, caractérisé en ce que la concentration de la solution absorbante en méthyldiéthanolamine est comprise entre 1N et 8N et de préférence entre 3N et 6N.

## Claims

1. A method for the selective extraction of H₂S from a natural gas simultaneously containing H₂S and CO₂, in which the gas to be treated is brought into contact, in an absorption zone, with an absorbent liquid which is selective for H₂S and which can be regenerated by heating, consisting of an aqueous methyldiethanolamine solution, circulating in counter current, in such a manner as to evacuate a gas with a low content of H₂S at the head of the absorption zone, and a stream of absorbent liquid charged with H₂S at the bottom of said zone, said stream of absorbent liquid charged with H₂S is passed into the upper part of a treatment zone, called an enrichment zone, in which the absorbent liquid, enriched with H₂S, flows down , said absorbent liquid present in the base of the enrichment zone is drawn off and introduced into a regeneration zone in which said absorbent liquid is subjected to a regeneration by heating in such a manner as to release the absorbed gases and to form an acid gaseous effluent which is rich in H₂S at the head of the regeneration zone and to produce a regenerated absorbent liquid at the bottom of this zone, said regenerated absorbent liquid being drawn off and recirculated in the absorption zone to be brought into contact with the gas to be treated, only one part of the gaseous effluent which is rich in disposable H₂S available at the head of the regeneration zone is drawn off to form an acid gaseous flow which is enriched with H₂S and the remainder of said gaseous effluent is introduced into the enrichment zone at a point located between the bottom of said zone and the point of entry of the absorbent liquid charged with H₂S, and there is collected, at the head of the enrichment zone, a gaseous current containing substantially less H₂S than the acid gaseous effluent available at the head of the regeneration zone, said current being reinjected into the absorption zone between the bottom of said zone and the point of arrival of the recycled regenerated absorbent liquid in this zone, said process being characterised in that the gas to be treated, containing H₂S and CO₂, injected into the absorption zone, has a pressure of from 50 to 80 bars absolute and in that the regeneration is performed in such a manner as to obtain, at the head of the regeneration zone, an absolute pressure of between 1.3 and 2.5 bars, the temperature and pressure conditions in the enrichment zone being maintained such that the temperatures in said zone are midway between the temperature at the head of the regeneration zone and the temperature at the bottom of the absorption zone and result in a temperature at the bottom of the enrichment zone which is between 50°C and 80°C and that the pressure at the head of said enrichment zone has a value of from 5 to 15 bars absolute, said pressure at the head of the enrichment zone being maintained at the selected value by bringing the part of the acid gaseous effluent intended to be injected into the enrichment zone to a sufficient pressure, by means of compression, prior to performing said injection.

2. A method according to Claim 1, characterised in that the methyldiethanolamine concentration of the absorbent solution is between 1N and 8N and preferably between 3N and 6N.

## Patentansprüche

1. Verfahren zur selektiven Extraktion von H₂S aus einem gleichzeitig H₂S und CO₂ enthaltenden Erdgas, wobei man das zu behandelnde Gas in einer Absorptionszone mit einer durch Erwärmen regenerierbaren, selektiv H₂S absorbierenden Flüssigkeit, die in einer wäßrigen Methyldiethanolaminlösung besteht, im Gegenstrom so kontaktiert, daß man am Kopf der Absorptionszone ein Gas mit einem verminderten H₂S-Gehalt und am Boden dieser Zone einen Strom der mit H₂S beladenen Absorptionsflüssigkeit abläßt, den mit H₂S beladenen Strom der Absorptionsflüssigkeit dem oberen Teil einer Behandlungszone, der sogenannten Anreicherungszone zuführt, in der die mit H₂S angereicherte Absorptionsflüssigkeit fließt, die am Boden der Anreicherungszone vorliegende Absorptionsflüssigkeit abzieht und sie einer Regenerationszone zuführt, in der die Absorptionsflüssigkeit durch Erwärmen so regeneriert wird, daß die absorbierten Gase freigesetzt werden, und am Kopf der Regenerationszone ein einen hohen H₂S-Gehalt aufweisender saurer Gasabstrom gebildet und am Boden dieser Zone eine regenerierte Absorptionsflüssigkeit erzeugt werden, wobei diese abgezogen und zur Kontaktierung mit dem zu behandelnden Gas der Absorptionszone wieder zugeführt wird, man einen Teil lediglich des am Kopf der Regenerationszone verfügbaren, einen hohen H₂S-Gehalt aufweisenden Gasabstroms abzieht, um einen mit H₂S angereicherten sauren Gasstrom zu bilden, und den Rest des Gasabstroms der Anreicherungszone an einer Stelle zuführt, die zwischen dem Boden dieser Zone und der Stelle gelegen ist, an der die mit H₂S beladene Absorptionsflüssigkeit zugeführt wird, und man am Kopf der Anreicherungszone einen Gasstrom abfangt, der wesentlich weniger H₂S enthält als der am Kopf der Regenerationszone verfügbare saure Gasabstrom, wobei dieser Gasstrom in die Absorptionszone zwischen dem Boden dieser Zone und der Eintrittsstelle der in diese Zone zurückgeführten regenerierten Absorptionsflüssigkeit wieder eingepreßt wird, dadurch gekennzeichnet, daß das in die Absorptionszone eingepreßte, H₂S und CO₂ enthaltende zu behandelnde Gas einen absoluten Druck von 50 bis 80 bar besitzt und man die Regeneration so durchführt, daß man am Kopf der Regenerationszone einen absoluten Druck zwischen 1,3 und 2,5 bar erzielt und man in der Anreicherungszone solche Temperatur- und Druckbedingungen aufrechthält, daß die Temperaturen in dieser Zone zwischen der Temperatur am Kopf der Regenerationszone und derjenigen am Boden der Absorptionszone liegen und zu einer Temperatur am Boden der Anreicherungszone zwischen 50 und 80°C führen und der absolute Druck am Kopf der Anreicherungszone einen Wert von 5 bis 15 bar aufweist, wobei der Druck am Kopf der Anreicherungszone bei dem gewählten Wert gehalten wird, indem man den für die Einpressung in die Anreicherungszone bestimmten Anteil des sauren Gasabstroms vor der Einpressung durch Komprimierung auf einen ausreichenden Druck einstellt.

2. Verfahren nach Anspruch 1, dadurch gekennzeichnet, daß die Methyldiethanolaminkonzentration der Absorptionslösung zwischen 1 N und 8 N und vorzugsweise zwischen 3 N und 6 N liegt.
